# EUROPEAN PATENT APPLICATION

(11) **EP 4 306 016 A1**
(43) Date of publication of application: **17.01.2024**
(21) Application number: 23184914.2
(22) Date of filing: 12.07.2023
(51) Int. Cl.: A47J 42/40

(54) **COFFEE GRINDER**

(30) Priority: 12.07.2022 IT 202200014629
(71) Applicant: Gruppo Cimbali S.p.A., 20082 Binasco (MI) (IT)
(72) Inventor: Dal Poz, Stefano, Binasco (IT); Coccia, Andrea, Binasco (IT)
(74) Representative: Perani & Partners S.p.A.

(57) **Abstract**

A coffee grinder (1) comprises a casing (2), a vessel (4), and grinding members (5) comprising two grinding wheels. The coffee grinder (1) comprises a first motor (6) connected to the grinding members (5) and configured to rotatably drive the grinding members (5). The coffee grinder (1) comprises a support (8) and a portafilter (9), which comprises a handle (10) and a portafilter cup (11). The support (8) is configured to support the portafilter (9). The coffee grinder (1) comprises a video camera (12) associated with the casing (2) and having a camera angle. The video camera (12) is configured to capture images in said camera angle. The coffee grinder (1) comprises a control unit connected to the video camera (12) and to the first motor (6), configured to receive the captured images, to detect a characteristic element of the portafilter (9), and to compare the detected characteristic element with a plurality of reference characteristic elements so as to identify the portafilter (9) and command the first motor (6) to control the actuation time thereof.

## Description

### Technical Field

The present invention relates to a coffee grinder. The coffee grinder is used in the professional or domestic field for the preparation of a ground mixture for beverages such as espresso or American coffee.

### Prior art

Coffee grinders which have a recognition device associated with a portafilter and a detection device on a coffee grinder are known in the art.

Document FR 2945427B1 discloses a portafilter for receiving ground coffee comprising identification means with a tag capable of emitting signals with radio frequencies. Such a document further discloses a system for preparing beverages with ground coffee consisting of a coffee grinder and a machine for making beverages. Said system comprises a reader for the radio signals with a limited range of action.

### Object of the Invention

In this context, the technical task underlying the present invention is to find an alternative solution with respect to the prior art for identifying a portafilter.

In particular, it is an object of the present invention to provide a coffee grinder capable of identifying a portafilter by means of a video camera.

The technical task mentioned and the objects stated are substantially achieved by a coffee grinder comprising the technical features set out in one or more of the appended claims.

Advantageously, a specific recipe can be associated to each portafilter, with a predetermined quantity and granulometry.

Still advantageously, it is possible to distribute the ground coffee according to the inclination of the portafilter, avoiding the formation of preferential outflow channels.

Still advantageously, it is possible to verify the state of wear of the grinding members by means of an analysis of the granulometry of the ground coffee in the portafilter cup.

### LIST OF FIGURES

Further features and advantages of the present invention will become more apparent from the description of an exemplary, but not exclusive, and therefore nonlimiting preferred embodiment of a coffee grinder, as illustrated in the appended drawings, in which:
- figure 1 is a perspective view of a coffee grinder, according to the present invention,
- figure 2 is a sectional side view of the coffee grinder of figure 1,
- figure 3 is a side view of the coffee grinder of figure 1,
- figure 4 is a view from below of a video camera and of a light source of the coffee grinder, according to the present invention,

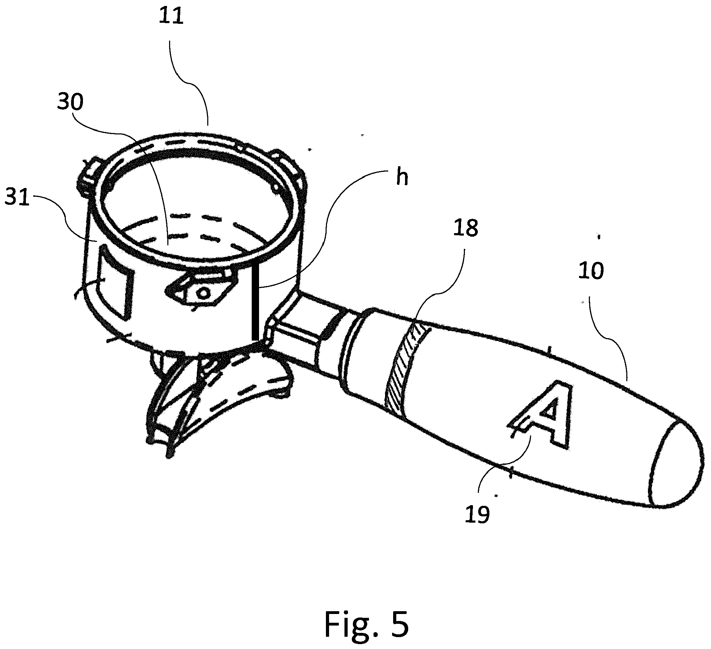

- figure 5 is a perspective view of a first embodiment of a portafilter of the coffee grinder.

### DETAILED DESCRIPTION

With reference to the appended figures, 1 refers to a coffee grinder according to the present invention.

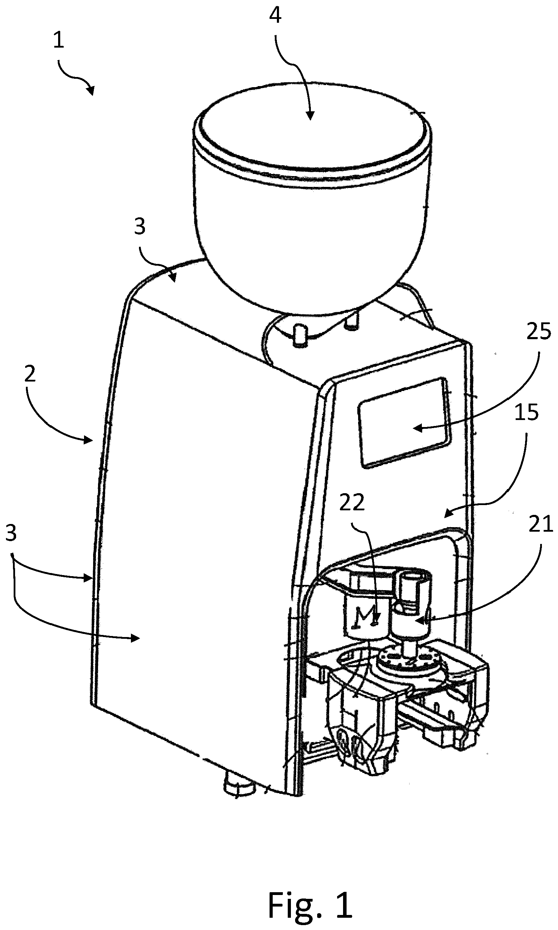

The coffee grinder 1 comprises a casing 2 with a plurality of walls 3 and a vessel 4 configured to contain coffee beans, as shown in figure 1.

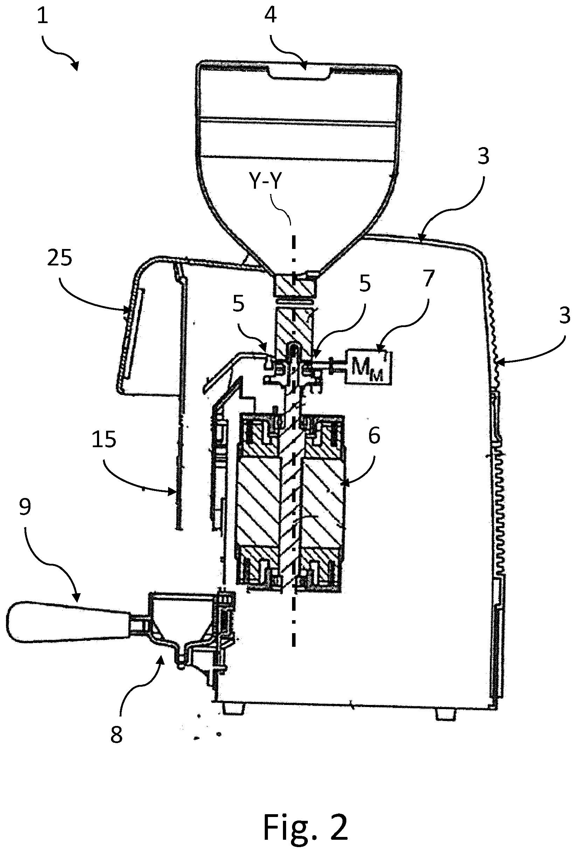

The coffee grinder 1 comprises grinding members 5, preferably housed inside the casing 2, configured to receive coffee beans to be ground from the vessel 4. In the preferred embodiment, shown in figure 2, the grinding members 5 comprise two grinding wheels (not shown in the figures) configured to rotate about a rotation axis Y-Y and mutually spaced along the rotation axis Y-Y.

Furthermore, the coffee grinder 1 comprises a first motor 6 connected to the grinding members 5 and configured to rotatably drive the grinding members 5.

In an embodiment, the coffee grinder 1 comprises a second motor 7, also connected to the grinding members 5 and configured to adjust the distance of the grinding wheels along the rotation axis Y-Y between different grinding positions to obtain different granulometries of the ground coffee. Preferably, the granulometry depends on the type of preparation. For example, it is preferable that the granulometry of coffee beans intended for preparing an espresso is finer with respect to the granulometry of the coffee beans used for preparing an American coffee.

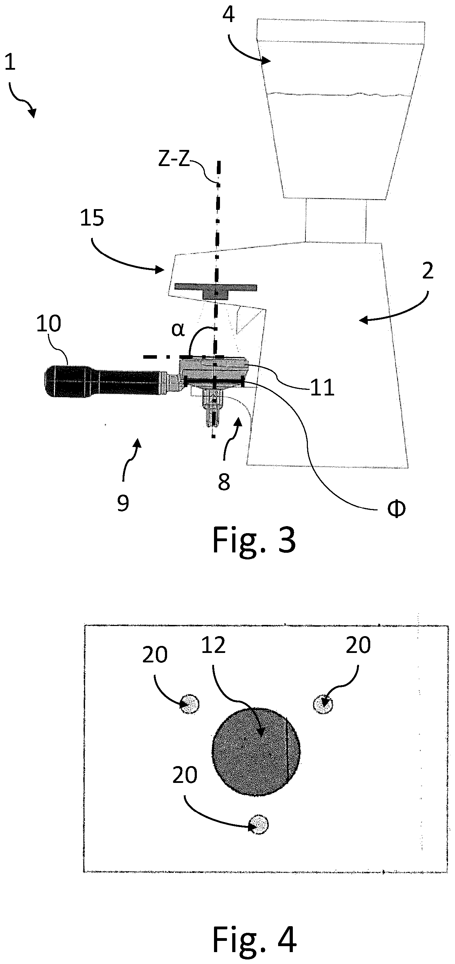

In greater detail, the coffee grinder 1 comprises a support 8 located at a front wall 15 of the casing 2, visible in figure 3. In a preferred embodiment, the support 8 is fork shaped.

The coffee grinder 1 further comprises a portafilter 9, comprising a handle 10 and a portafilter cup 11, shown in figure 6. The support 8 is configured to support the portafilter 9 during the preparation of beverages. The portafilter cup 11 has a bottom 30 on which coffee extraction holes with a diameter Φ are obtained and a peripheral wall 31 which has an extension h and an inclination with respect to the bottom 30.

In an embodiment, shown in figure 1, the coffee grinder 1 comprises a pressing member 21 positioned at the casing 2, preferably at the front wall 15, and configured to press the ground coffee beans in the portafilter cup 11. In an embodiment, said pressing member 21 is of the motorized type. When the pressing member 21 is of the motorized type, the coffee grinder 1 comprises a third motor 22, shown in figure 1, connected to the pressing member 21 and configured to move the pressing member 21.

It should be noted that the coffee grinder 1 comprises a video camera 12 associated with the casing 2 and having a camera angle. The video camera 12 is configured to capture images within the camera angle. In a preferred embodiment, the video camera 12 is configured to capture images of the support 8 and of the portafilter 9, when the portafilter 9 is positioned at the camera angle.

In a preferred embodiment, the video camera 12 is configured to generate a stream of images, preferably with a frequency of about 30 milliseconds.

In more detail, the coffee grinder 1 comprises a control unit connected to the video camera 12 and to the first motor 6. The control unit is configured to receive the images captured by the video camera 12, detect a characteristic element of the portafilter 9, when the portafilter 9 is positioned in the camera angle, compare it with a plurality of reference characteristic elements so as to identify the portafilter 9 and control the first motor 6 to control the actuation time thereof as a function of said detected characteristic element.

In an embodiment, the control unit is also connected to the second motor 7. Furthermore, in an embodiment, the control unit is configured to also control the second motor 7 to control the distance of the grinding wheels along the direction Y-Y as a function of said detected characteristic element of the portafilter 9.

It should be noted that the control unit is configured to analyze the captured images and to detect the presence of the portafilter 9 in the camera angle.

In a preferred embodiment, an image recognition algorithm is implemented in the control unit, configured to analyze the captured images and to detect the presence of the portafilter 9. In other words, the image recognition algorithm is configured to analyze the captured images and detect if the portafilter 9 is present in said captured images or if there are accidental signals such as vapour puffs or coffee residues. Preferably, the image recognition algorithm is configured to analyze the captured images to detect the presence of the portafilter 9 every 5-10 images captured by the video camera 12.

In an alternative embodiment, the image recognition algorithm is implemented in a data processing unit.

In the preferred embodiment, a trained neural network algorithm is implemented in the control unit to identify the portafilter 9, when this is in the camera angle.

In an alternative embodiment, the neural network algorithm is implemented in a data processing unit in signal communication with the video camera 12.

In a further alternative embodiment, the neural network algorithm is implemented on a cloud platform in signal communication with the video camera 12.

The neural network algorithm is configured to select grinding settings related to the identified portafilter 9 among a plurality of reference grinding settings. In preferred embodiment, the grinding settings comprise at least the actuation time of the first motor 6. In other words, in the preferred embodiment, the grinding setting allows to control the amount of ground coffee to be deposited in the portafilter cup 11. The amount of ground coffee is determined through the control of the actuation time of the first motor 6, and therefore of the grinding members.

In an embodiment, the grinding setting also comprises the control of the second motor 7. In other words, preferably, the grinding settings also comprise the granulometry control of the ground coffee.

In detail, the neural network algorithm identifies the portafilter 9 as a function of the respective characteristic element. Preferably, the neural network algorithm identifies the respective characteristic element from the images captured by the video camera 12.

It should be noted that the characteristic element is selected from a characteristic size of the portafilter cup 11, a recognition element associated with the portafilter 9, or a combination thereof.

In a first embodiment, the characteristic element is the characteristic size of the portafilter cup 11, for example, chosen from the diameter Φ of the bottom 30 of the portafilter cup 11, the vertical extension h of the peripheral wall 31 and the inclination of the peripheral wall 31 with respect to the bottom 30. In said first embodiment, the inclination of the peripheral wall 31 is the preferred characteristic element.

In a second embodiment, the characteristic element is one of the recognition elements associated with the portafilter 9. Said recognition element is, for example, a plate 18, preferably positioned on the handle 10, or a distinctive sign 19 at for example the handle 10.

A third embodiment envisages that the characteristic element is a combination of one among the characteristic sizes of the portafilter cup 11 and one of the recognition elements of the portafilter 9.

Preferably, the coffee grinder 1 comprises a screen 25, in signal communication with the control unit and configured to transmit messages to an operator, for example any malfunction messages from the coffee grinder 1.

Furthermore, the coffee grinder 1 comprises a light source 20, positioned at the casing 2, in signal communication with the control unit and configured to illuminate the support 8 and the portafilter 9, when the portafilter 9 is in the camera angle. The light source 20 is positioned at the video camera 12. Preferably, the light source 20 is positioned at the front wall 15. Preferably, the light source 20 is facing the support 8 and the portafilter 9, when said portafilter 9 is positioned in the camera angle. Preferably, the coffee grinder 1 comprises a plurality of light sources 20.

In more detail, the light source 20 is configured to uniformly and constantly illuminate a work area, captured by the video camera 12. Thereby, the images captured by the video camera 12 are not altered by the ambient brightness conditions or by the presence of shaded areas. Thereby the identification of the portafilter 9 by the neural network algorithm is not compromised.

The light source 20 is configured to illuminate the support 8 and the portafilter 9 even in the rest condition of the coffee grinder 1, i.e., when the first motor 6 and, when present, the second motor 7 are stopped.

The control unit is configured to activate the light source 20 intermittently when the portafilter 9 is positioned at the support 8. In other words, an operator responsible for preparing beverages, seeing the light source 20 flashing, knows that the portafilter 9 is correctly positioned and is ready to use.

In an alternative embodiment, not shown in the figures, the video camera 12 is positioned on any side wall 3 of the casing 2 and is movable so as to orient and capture images of the portafilter 9, when the portafilter 9 is positioned in the camera angle. In other words, in said embodiment, the video camera 12 is capable of adjusting the shooting direction of a lens and capturing images of the portafilter 9 from any position, even if not directly facing the portafilter 9. Preferably, the video camera 12 is positioned at the front wall 15 of the casing 2. Preferably, the video camera 12 is facing the support 8 and the portafilter 9, when the portafilter 9 is positioned in the camera angle.

In a preferred embodiment, shown in figure 2 or 3, the video camera 12 faces the support 8 so that the camera angle comprises the support 8 and the portafilter 9, when the portafilter 9 is positioned at the support 8. Preferably, the video camera 12 is positioned on the front wall 15 so that the video camera 12 is elevated with respect to the support 8.

Furthermore, still preferably, the video camera 12 is positioned so that the lens and the portafilter cup 11 of the portafilter 9 are aligned with respect to a vertical axis Z-Z which is parallel with respect to the rotation axis Y-Y, as shown in figure 3, passing through a respective centre, when the portafilter 9 is positioned at the support 8.

In a preferred embodiment in which the coffee grinder 1 comprises the pressing member 21, the neural network algorithm is configured to identify a pressing performed by said pressing member 21. In detail, the neural network algorithm is configured to identify a free surface, formed by ground coffee beans inside the portafilter cup 11 and to measure an inclination angle α which said free surface forms with respect to the vertical axis Z-Z, as shown in figure 3. If the inclination angle α with the vertical axis Z-Z is less than 80° or greater than 100°, the control unit is configured to send an error message to the screen 25, so that an operator checks the status of the coffee grinder 1. Advantageously, it is possible to avoid the formation of preferential outflow channels for the passage of hot water during the preparation of coffee, due to the asymmetrical arrangement of the ground coffee in the portafilter cup 11.

Preferably, the neural network algorithm is configured to perform a granulometric analysis of the ground coffee present on the free surface in the portafilter cup 11. If the identified granulometry does not correspond to the grinding parameters associated with the portafilter 9 in use, the control unit is configured to send an error message to the screen 25 so that the state of wear of the grinding means 5 is verified.

A method of controlling the coffee grinder 1 comprises a step of positioning the portafilter 9 at the camera angle. Said step of positioning the portafilter 9 at the camera angle provides a sub-step of positioning the portafilter 9 at the support 8.

Furthermore, the method comprises a step of capturing images of the support 8 and the portafilter 9 by means of the video camera 12, when the portafilter 9 is positioned at the camera angle. Preferably, the step of capturing images comprises a sub-step of keeping the video camera 12 active when the first motor 6 is stopped. In the embodiment in which the coffee grinder 1 comprises the second motor 7, the step of capturing images comprises a sub-step of keeping the video camera 12 active when the second motor 7 is also stopped. Preferably, the step of capturing images comprises a sub-step of activating the light source 20 to homogeneously illuminate the work area. Preferably, the sub-step of activating the light source 20 to homogeneously illuminate the work area comprises a further sub-step of intermittently activating the light source 20 when the portafilter 9 is positioned at the support 8.

Next, the method comprises a step of receiving the images captured by the camera 12 on the control unit.

The method comprises a step of checking that the image captured by the video camera 12 represents a portafilter 9. The step of checking that the image captured by the video camera 12 represents a portafilter 9 comprises a sub-step of identifying a portafilter 9 in the image captured by the neural network algorithm. If the neural network algorithm does not identify the portafilter 9 in the captured image, the step of checking that the image captured by the video camera 12 represents a portafilter 9 is repeated with a subsequently captured image.

Next, the method comprises a sub-step of checking that the portafilter 9 is positioned on the support 8.

The method 1 comprises a further step of detecting the characteristic element of the portafilter 9.

Next, the method comprises a step of comparing the detected characteristic element with the plurality of reference characteristic elements so as to identify the portafilter 9.

Furthermore, the step of comparing the detected characteristic element comprises a sub-step of selecting grinding settings relative to the identified portafilter 9 among the plurality of reference grinding settings.

The method comprises a step of driving the first motor 6 as a function of said detected characteristic element of the portafilter 9.

In an embodiment, the method comprises a subsequent step of controlling the second motor 7 as a function on said detected characteristic element of the portafilter 9.

In the embodiment in which the coffee grinder 1 comprises the pressing member 21, the method comprises a further step of identifying the pressing performed. Said step of identifying the pressing comprises further sub-steps of identifying the free surface, comparing the inclination angle α of the free surface with the vertical axis Y-Y and measuring the difference of said inclination angle α. The method provides a further sub-step of sending an error message to the screen when the inclination angle α is less than 80° or greater than 100°, preferably when the inclination angle α is less than 86° or greater than 94°.

It should be noted that the neural network algorithm undergoes a first training step in the company, prior to commissioning. In detail, said first training step comprises a sub-step of acquiring with the video camera 12 a plurality of images related to the portafilter 9, in the most frequent conditions of use. Said first training step comprises a further sub-step of identifying the portafilter 9 with the neural network algorithm, in the most frequent conditions of use.

In a preferred embodiment, the method includes a further training step in an operating location of the coffee grinder 1. Preferably, the further training step is provided when the neural network algorithm does not correctly identify the characteristic element of the portafilter 9 in the conditions of use. Preferably, said further training step provides a sub-step in which an operator manually associates the unidentified characteristic element of the portafilter 9 with a corresponding grinding setting.

## Claims

1. A coffee grinder (1) comprising:
- a casing (2) with a plurality of walls (3),
- a vessel (4) configured to contain coffee beans,
- grinding members (5) configured to receive coffee beans to be ground from the vessel (4), the grinding members (5) comprising two grinding wheels configured to rotate about a rotation axis (Y-Y) and spaced apart along the rotation axis (Y-Y),
- a first motor (6) connected to the grinding members (5) and configured to rotatably drive the grinding members (5),
- a support (8) located at a front wall (15) of the casing (2),
- a portafilter (9) comprising a handle (10) and a portafilter cup (11), the support (8) being configured to support the portafilter (9),
**characterized in that** it comprises
- a video camera (12) associated with the casing (2), said video camera (12) having a camera angle and being configured to capture images **in that** camera angle,
- a control unit connected to the video camera (12) and to the first motor (6) and configured to receive the images captured by the video camera (12), to detect a characteristic element of the portafilter (9) when the portafilter (9) falls within the camera angle, and to compare the detected characteristic element with a plurality of reference characteristic elements to identify the portafilter (9) and command the first motor (6) to control the actuation time of the first motor (6) in response to said detected characteristic element of the portafilter (9).

2. A coffee grinder (1) as claimed in claim 1, wherein the control unit is configured to analyze the captured images and detect the presence of the portafilter (9) in the camera angle.

3. A coffee grinder (1) as claimed in one of claims 1 or 2, wherein the control unit is implemented with a neural network algorithm trained to identify the portafilter (9), when the portafilter (9) falls within the camera angle.

4. A coffee grinder (1) as claimed in claim 3, wherein the neural network algorithm is configured to select grinding settings for the portafilter (9) by identifying them from a variety of reference grinding settings.

5. A coffee grinder (1) as claimed in any of claims 1 to 4, wherein the characteristic element is chosen among a characteristic size of the filter cup (11), a recognition element associated with the portafilter (9) or a combination thereof.

6. A coffee grinder (1) as claimed in any of claims 1 to 5, comprising a light source (20) placed at the casing (2), which is in signal communication with the control unit and is configured to illuminate the support (8) and the portafilter (9), when the portafilter (9) falls within the camera angle.

7. A coffee grinder (1) as claimed in claim 6, wherein the control unit is configured to intermittently switch on the light source (20) when the portafilter (9) is placed at the support (8).

8. A coffee grinder (1) as claimed in any of claims 1 to 7, wherein the video camera (12) is movable to orient itself and capture images of the portafilter (9), when the portafilter (9) falls within the camera angle.

9. A coffee grinder (1) as claimed in any of claims 1 to 8, wherein the video camera (12) faces the support (8) so that the video camera (12) is aligned with the filter cup (11), when the portafilter (9) falls within the camera angle.

10. A coffee grinder (1) as claimed in any of claims 1 to 9, comprising a second motor (7) connected to the grinding members (5) and configured to adjust the spacing of the grinding wheels along the rotation axis (Y-Y) between different grinding positions, the second motor (7) being connected to the control unit, the control unit being configured to control the second motor (7).

11. A method of controlling a coffee grinder (1) as claimed in any of claims 1 to 10, comprising the steps of:
- capturing images in the camera angle by the video camera (12),
- receiving the images acquired by the video camera (12) on the control unit,
- checking whether the captured image represents a portafilter (9),
- checking whether the portafilter (9) is placed on the support (8),
- detecting a characteristic element of the portafilter (9),
- comparing the detected characteristic element with the plurality of reference characteristic elements, to thereby identify the portafilter (9),
- controlling the first motor (6) according to said detected characteristic element of the portafilter (9).

12. A method as claimed in claim 11, comprising an additional step of controlling the second motor (7) to adjust the spacing of the grinding wheels along the rotation axis (Y-Y) through different grinding positions.
